Europäisches Patentamt

European Patent Office

Office européen des brevets

(11) Veröffentlichungsnummer: **0 278 047**
A1

## (12) EUROPÄISCHE PATENTANMELDUNG

(21) Anmeldenummer: 87111552.3

(22) Anmeldetag: **10.08.87**

(51) Int. Cl.4: **B43M 3/04** , B65H 5/16 , B65G 19/02

(30) Priorität: **11.02.87 DE 3704241**

(43) Veröffentlichungstag der Anmeldung:
**17.08.88 Patentblatt 88/33**

(84) Benannte Vertragsstaaten:
**DE FR GB**

(71) Anmelder: **Bell & Howell GmbH**
**Grüner Weg 8**
**D-6360 Friedberg/Hessen(DE)**

(72) Erfinder: **Klietz, Lothar,**
**Mörler Strasse 11**
**D-6360 Friedberg(DE)**

(74) Vertreter: **Dorner, Jörg, Dr.-Ing. et al**
**Dorner & Hufnagel Patentanwälte**
**Ortnitstrasse 20**
**D-8000 München 81(DE)**

(54) **Vorrichtung zum Verschieben von Papierblättern, insbesondere bei Kuvertiermaschinen.**

(57) Eine Erhöhung der Arbeitsgeschwindigkeit und eine Vereinfachung des Aufbaus einer Vorrichtung zum Einschieben von Kuvertiergut in Umschlaghüllen wird dadurch erreicht, daß Einschubarme (23, 24) seitlich versetzt fest mit Traversenelementen (29) verbunden sind, die jeweils an in bestimmtem Abstand voneinander entfernten Punkten mit zwischen Rädern oder Rollen (13-16) parallel zu einer Kuvertiergutauflagefläche (12) über dieser ausgespannten Antriebssträngen (10,11) gekuppelt sind, derart, daß bei Bewegung der Traversenelemente in Einschubrichtung längs des Obertrums der Antriebsstränge die Einschubarme in Richtung auf die Kuvertiergutauflagefläche nach abwärts ragen und die Einschubfinger der Einschubarme in Eingriff mit einem Kuvertiergutstapel (28) kommen, während bei Bewegung der Traversenelemente längs des Untertrums der Antriebsstränge die Einschubarme am Obertrum der Antriebsstränge vorbei nach aufwärts ragen und bei der Bewegung der Traversenelemente um die jeweiligen endständigen Räder oder Rollen von der Eingriffsstellung am Kuvertiergutstapel abgeschwenkt und in die Rückhubstellung hochgeschwenkt werden.

FIG.1

# Vorrichtung zum Verschieben von Papierblättern oder Papierblattstapeln, insbesondere zum Einschieben von Kuvertiergut in Umschlaghüllen

Die Erfindung bezieht sich auf eine Vorrichtung zum Verschieben von Papierblättern oder Papierblattstapeln, insbesondere zum Einschieben von Kuvertiergut in Umschlaghüllen mit Einschubarmen, deren Finger in einem Arbeitshub etwa in Richtung einer Kuvertiergutauflagefläche in deren Ebene von einer Ausgangsstellung auf die Öffnung einer Umschlaghülle hin, vorzugsweise in Nuten der Kuvertiergutauflagefläche, bewegbar und in einem Rückhub oberhalb der Kuvertiergutauflagefläche in die Ausgangsstellung rückbewegbar sind. Es sei ausdrücklich bemerkt, daß hier betrachtete Vorrichtungen auch zum Handhaben von Blattstapeln oder Belegsätzen, etwa bei der Übergabe von einem Speichertrog an eine Transportkette, verwendbar sind, wobei die Übergabebewegung senkrecht oder auch parallel zur Transportbewegungsrichtung der Transportkette verlaufen kann.

In Gebrauch befindliche Kuvertiervorrichtungen dieser Art weisen in vergleichsweise großem Abstand oberhalb der Kuvertiergutauflagefläche gelagerte Schwingen auf, an denen die Einschubarme befestigt sind, wobei die Schwinge durch einen Kurbelantrieb betätigt wird und die Einschubfinger während des Arbeitshubes im wesentlichen parallel zur Kuvertiergutauflagefläche bewegt werden.

Es zeigt sich jedoch, daß die Arbeitsgeschwindigkeit der bekannten Vorrichtungen begrenzt ist, da vergleichsweise große Massen zur Ausführung der Einschubbewegung der Einschubarme beschleunigt und wieder verzögert werden müssen und die Justierung der Vorrichtung in solcher Weise, daß die Einschubfinger in der Ausgangsstellung störungsfrei mit einem Kuvertiergutstapel in Eingriff kommen und nach Durchführung der Einschubbewegung sich ebenso störungsfrei von dem Kuvertiergutstapel trennen, Schwierigkeiten bereitet.

Durch die Erfindung soll die Aufgabe gelöst werden, eine Vorrichtung der eingangs kurz beschriebenen Art so auszugestalten, daß eine erhöhte Arbeitsgeschwindigkeit und eine geringere Störungsanfälligkeit erreicht werden.

Diese Aufgabe wird erfindungsgemäß dadurch gelöst, daß die Einschubarme an parallel zur Einschubrichtung orientierten Traversenelementen befestigt sind, welche an einer oberhalb der Kuvertiergutauflagefläche parallel zu dieser in größerem Vertikalabstand verlaufenden Arbeitshubführung, einer ebenfalls oberhalb der Kuvertiergutauflagefläche parallel zu dieser in geringerem Vertikalabstand verlaufenden Rückhubführung und an die Arbeitshubführung und die Rückhubführung an ihren jeweiligen Enden verbindenden Bogenführungen bewegbar sind, wobei die Einschubarme an den Traversenelementen derart befestigt sind, daß sie während des Arbeitshubes von der Arbeitshubführung aus an der Rückhubführung vorbei zu der Kuvertiergutauflagefläche reichen und während des Rückhubes von der Rückhubführung an der Arbeitshubführung vorbei nach aufwärts stehen.

Wird bei dieser Ausbildung der Führungen für die Traversenelemente ein Einschubarm längs der Rückhubführung in Richtung auf die Ausgangsstellung zurückbewegt, so gelangt das betreffende Traversenelement in den Bereich einer von der Rückhubführung nach aufwärts zur Arbeitshubführung überleitenden Bogenführung, wobei der zunächst nach aufwärts ragende Einschubarm entsprechend der Wanderung des Traversenelementes an der Bogenführung in Richtung auf das Vorderende der Kuvertiergutauflagefläche und schließlich nach abwärts geklappt wird und dann, sobald das Traversenelement in den Bereich der Arbeitshubführung einläuft, mit seinen Einschubfingern in der Ebene der Kuvertiergutauflagefläche vorzugsweise in Nuten derselben vorwärts bewegt wird, um den Arbeitshub durchzuführen.

Am Ende der Arbeitshubführung bewegt sich das betreffende Traversenelement in die nach abwärts zur Rückhubführung überleitende Bogenführung hinein und klappt während der Bewegung an der Bogenführung den zugehörigen Einschubarm unter Zurückziehung der Einschubfinger vom Kuvertiergutstapel in Richtung zum Hinterende der Kuvertiergutauflagefläche und schließlich nach aufwärts, so daß dann, wenn das Traversenelement seinen Weg an der Rückhubführung beginnt, der betreffende Einschubarm nach aufwärts stehend den Rückhub ausführen kann.

Der Abstand zwischen dem Beginn des Arbeitshubes und dem Punkt, an dem während des Arbeitshubes die Einschubfinger mit dem Kuvertiergutstapel in Eingriff kommen, wird selbstverständlich so gewählt, daß die Einschubfinger bei der Schwenkbewegung der Einschubarme nach abwärts nicht mit dem Kuvertiergutstapel in Kollision geraten.

Die hier angegebene Vorrichtung zeichnet sich durch vergleichsweise geringe zu beschleunigende bzw. zu verzögernde Massen aus und ist daher für hohe Arbeitsgeschwindigkeiten geeignet. Die Einschubfinger werden während des Arbeitshubes präzise parallel zur Ebene der Kuvertiergutauflagefläche bewegt und trennen sich am Ende des Arbeitshubes durch eine Rückzugbewegung entgegen der Arbeitshubbewegung von dem Kuvertiergutstapel.

Die Arbeitshubführung, die Rückhubführung und die Bogenführungen können von Obertrum bzw. vom Untertrum bzw. den über Räder oder Rollen gelegten Abschnitten mindestens eines endlosen, schleifenförmigen Antriebsstranges gebildet sein, der die Gestalt einer über Kettenräder gelegten Antriebskette oder eines über Rollen gelegten Riemens, insbesondere Zahnriemens, oder eines Drahtseiles haben kann.

Dabei kann die Führung der Traversenelemente im Bereich der Arbeitshubführung dadurch verbessert werden, daß an den Enden der Traversenelemente jeweils Rollen gelagert sind, welche zwischen längs der Arbeitshubführung verlaufenden Zusatzführungsschienen geführt sind. Derartige Zusatzführungsschienen können auch längs weiterer Abschnitte des Weges der Traversenelemente vorgesehen sein.

Im übrigen sind vorteilhafte Ausgestaltungen und Weiterbildungen der hier angegebenen Vorrichtung zum Einschieben von Kuvertiergut in Umschlaghüllen in den dem Anspruch 1 nachgeordneten Ansprüchen gekennzeichnet. Der Inhalt dieser Ansprüche wird hierdurch ausdrücklich zum Bestandteil der Beschreibung gemacht, ohne an dieser Stelle den Wortlaut zu wiederholen.

Nachfolgend wird ein Ausführungsbeispiel anhand der Zeichnung näher beschrieben. Es stellen dar:

Fig. 1 Eine Prinzipskizze einer Vorrichtung der vorliegenden angegebenen Art zum Einschieben von Kuvertiergut in Umschlaghüllen in Seitenansicht zur Erläuterung der Wirkungsweise und

Fig. 2 eine schematische perspektivische, teilweise aufgebrochene Ansicht einer praktischen Ausführungsform einer Einschubvorrichtung für Kuvertiergut unter Weglassung bestimmter Vorrichtungsteile zur Erhöhung der Übersichtlichkeit der Darstellung.

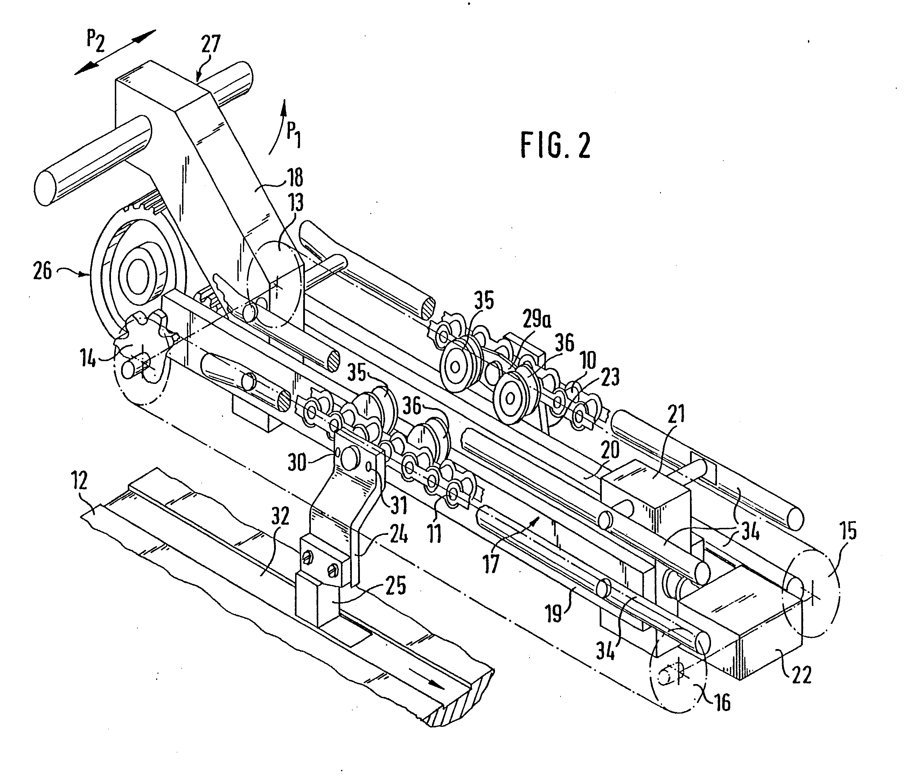

Die Vorrichtung enthält zwei in bestimmtem seitlichen Abstand voneinander angeordnete, zueinander parallel verlaufende endlose, - schleifenförmige Antriebsstränge, beispielsweise wie in Figur 2 gezeigt, zwei Antriebsketten 10 und 11, welche über nahe dem hinteren Ende einer Kuvertiergutauflagefläche 12 befindliche Kettenräder 13 bzw. 14 und über nahe dem vorderen Ende der Kuvertiergutauflagefläche 12 befindliche Kettenräder 15 bzw. 16 gelegt sind. Die Kettenräder 13, 14, 15 und 16 sind an einem Gestell 17 gelagert, das ein Basisteil 18, sich über die Kuvertiergutauflagefläche 12 hinweg erstreckende Träger 19 und 20 sowie ein Kopfteil 21 enthält, gegen das sich ein ebenfalls dem Gestell 17 angehörender Lagerbock 22 federnd abstützt, an dem die Kettenräder 15 und 16 gelagert sind und welcher bewirkt, daß die Antriebsketten 10 und 11 gespannt gehalten werden.

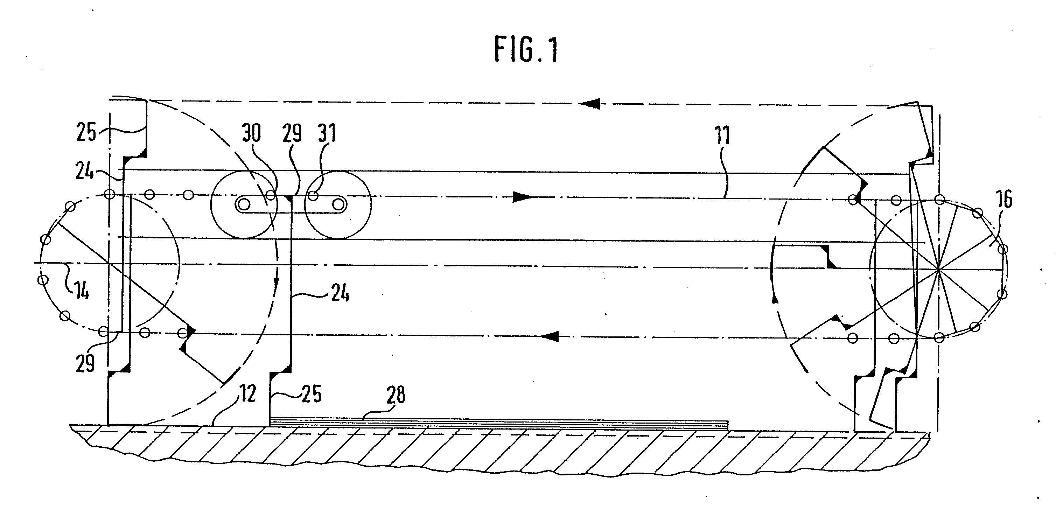

An den Antriebssträngen, also bei dem Ausführungsbeispiel nach Figur 2, an den Antriebsketten 10 und 11 sind über Traversenelemente Einschubarme 23 und 24 in solcher Weise befestigt, daß die Einschubarme stets im wesentlichen vertikal von dem jeweils zugehörigen Antriebsstrang bzw. der jeweils zugehörigen Antriebskette wegstehen. Die in Figur 2 mit 30 und 31 bezeichneten Verbindungspunkte der Antriebsstränge mit den Einschubarmen 23 und 24 haben also bestimmten Abstand voneinander in Richtung des Weges des jeweiligen Antriebsstranges, wie aus Figur 1 erkennbar ist. Demgemäß können die Traversenelemente entweder gesonderte Bauteile sein, an denen die Einschubarme 23 und 24 befestigt sind oder die Traversenelemente können gemäß Figur 2 einstückig mit den Einschubarmen verbunden sein, also durch entsprechende Ausbildung der von den Einschubfingern entfernten Enden der Einschubarme gebildet sein. Die Einschubfinger sind in Figur 2 mit 25 bezeichnet.

Die nahe dem hinteren Ende der Kuvertiergutauflagefläche 12 gelegenen Kettenräder 13 und 14 sind mittels eines allgemein mit 26 bezeichneten, in der Zeichnung jedoch nicht im einzelnen ausgeführten Antriebs gesteuert in Umdrehung versetzbar, um die Antriebsketten 10 und 11 im Bereich ihres Obertrums mit Bezug auf die in Figur 2 gezeigte Lage von links nach rechts und im Bereich ihres Untertrums von rechts nach links bewegen zu können.

Das Gestell 17 ist an einer in Figur 2 schematisch bei 27 angegebenen Schwenklagerung gelagert, um die gesamte Vorrichtung in Richtung des Pfeiles $P_1$ von der Kuvertiergutauflagefläche 12 hochschwenken zu können, damit gegebenenfalls aufgetretene Papierstaus beseitigt und Einstellungen vorgenommen werden können. Schließlich ist, ebenfalls zur Einstellung der Vorrichtung, das Gestell an der Schwenklagerung 27 in Richtung des Doppelpfeiles $P_2$ in einer Richtung quer zur Richtung des Arbeitshubes verstellbar ausgebildet.

Es sei nun Figur 1 näher betrachtet. In dieser Zeichnung ist stark schematisiert lediglich die Antriebskette 11 angedeutet, welche über die ebenfalls schematisch angedeuteten Kettenräder 14 und 16 gelegt ist. Die Antriebskette 11 und die Kettenräder 14 und 16 sind in strichpunktierten Linien eingezeichnet, während allein ein Einschubarm 24 mit seinem Einschubfinger 25 sowie die Kuvertiergutauflagefläche 12 mit einem darauf befindlichen Kuvertiergutstapel 28 in ausgezogenen Linien wiedergegeben sind und der Einschubarm 24 in einer Reihe von Arbeitsstellungen gezeigt ist, um die Funktionsweise deutlich zu machen.

Ein mit dem Einschubarm 24 fest verbundenes Traversenelement 29 ist an zwei in festem Abstand voneinander gelegenen Punkten 30 und 31 mit der Antriebskette 11 gekuppelt, so daß der Einschubarm 24 stets im wesentlichen senkrecht zur Antriebskette 11 orientiert bleibt. Wandert das Traversenelement 29 von der durch das Untertrum der Antriebskette 11 gebildeten Rückhubführung über das Kettenrad 14 nach aufwärts zu der durch das Obertrum der Antriebskette 11 gebildeten Arbeitshubführung, so klappt der am Traversenelement 29 befestigte Einschubarm 24 von der nach aufwärts gerichteten Stellung in Richtung auf das Kettenrad 16 hin und schließlich nach abwärts in eine Stellung, in der das untere Ende des Einschubfingers 25 in die Ebene der Kuvertiergutauflagefläche 12 zu liegen kommt. Die Einschubfinger 25 greifen in dieser Stellung in Nuten 32 der Kuvertiergutauflagefläche ein, um während des Arbeitshubes unter einen Kuvertiergutstapel 28 geschoben werden zu können.

Wird jetzt das Traversenelement 29 von dem Obertrum der Antriebskette 11 vorwärts bewegt, so führen die Einschubfinger 25 eine Einschubbewegung aus und transportieren den Kuvertiergutstapel 28 über die Kuvertiergutauflagefläche 12 hin in eine offengehaltene Umschlaghülle hinein. Sobald der Kuvertiergutstapel 28 vollständig in die Umschlaghülle transportiert ist, tritt das Traversenelement 29 vom Obertrum der Antriebskette 11 geführt in den Weg über das Kettenrad 16 ein und schwenkt dabei den Einschubarm 24 mit Bezug auf die in Figur 1 gezeigte Lage der Vorrichtung im Uhrzeigersinn, so daß die Einschubfinger 25 vom Kuvertiergutstapel wegbewegt werden und - schließlich über das Obertrum der Antriebskette 11 angehoben werden, wie aus Figur 1 ohne weiteres zu ersehen ist. Sobald das Traversenelement 29 das Kettenrad 16 verlassen hat, bewegt es sich an dem Untertrum der Antriebskette 11 zum Kettenrad 14 zurück und der Einschubarm 25 führt den Rückhub aus.

Man erkennt, daß die Einschubarme 24 und die Einschubfinger 25 in solcher Weise seitlich von der Arbeitshubführung, der Rückhubführung und den dazwischen verlaufenden Bogenführungen, also in solcher Weise seitlich von den zugehörigen endlosen Antriebssträngen montiert sein müssen, daß die zuvor beschriebenen Bewegungen der Einschubarme durchführbar sind. Zu diesem Zwecke sind die Einschubarme entweder, wie in Figur 2 gezeigt, quer zu ihrer Bewegungsrichtung gekröpft oder an seitlich von den Traversenelementen wegragenden Achsansätzen befestigt.

Gemäß einer bevorzugten Ausgestaltung der hier angegebenen Vorrichtung zum Einschieben von Kuvertiergut in Umschlaghüllen wird eine besonders präzise Führung der Einschubfinger 25 parallel zur Kuvertiergutauflagefläche 12 in deren Nuten 32 dadurch erreicht, daß mindestens längs des Obertrums der Antriebsketten 10 und 11 Zusatzführungsschienen 34, etwa in Gestalt von Führungsstäben, an dem Gestell 17 befestigt sind. Die paarweise in bestimmtem Vertikalabstandparallel zueinander verlaufenden Führungsstäbe 34 wirken mit Rollen 35 und 36 zusammen, die je weils nahe den Enden der Traversenelemente 29 an diesen oder an einem damit fest verbundenen Träger 29 a (siehe Figur 2) gelagert sind. Der Abstand der Lagerungsachsen der Rollen 35 und 36 kann größer gewählt werden als der Abstand der Verankerungspunkte 30 und 31 der Antriebsketten 10 und 11 an den Traversenelementen 29, um die Genauführung der Einschubarme 24 während der Bewegung der Traversenelemente 29 längs des Obertrums der Antriebsketten zu erhöhen. Allerdings ist dann ein trichterartiger Einlaufbereich und Auslaufbereich der Führungsschienen 34 vorzusehen, da die Rollen 35 und 36 aufgrund des Abstandes ihrer Achsen von den Verankerungspunkten 30 und 31 der Traversenelemente bei deren Eintritt in die Bogenführungen den Geradführungsbereich verlassen. Für die Durchführung der Klappbewegungen der Einschubarme zu Beginn und zu Ende des Arbeitshubes sowie für den Rückhub kann die Führung der Traversenelemente allein an den Antriebsketten 10 und 11 ausreichend sein.

Anstelle der mit den Zusatzführungsschienen zusammenwirkenden Rollen können in Abwandlung der gezeigten Ausführungsform auch Gleitstücke eingesetzt werden.

Eine weitere Abwandlung der in der Zeichnung gezeigten Ausführungsform sieht vor, daß nur ein einziger endloser, schleifenförmiger Antriebsstrang über endständige Rollen oder Kettenräder gelegt ist und eine Einschubarmanordnung mit beispielsweise zwei nebeneinander liegenden Einschubarmen auf einer gemeinsamen, mit einem Traversenelement gekuppelten Welle einseitig fliegend angeordnet ist. Allerdings ist der Ausführungsform nach Figur 2 insbesondere bei Kuvertiergutstapeln größerer Breite vornehmlich aus mechanischen Gründen der Vorzug zu geben.

## Ansprüche

1. Vorrichtung zum Verschieben von Papierblättern oder Papierblattstapeln, insbesondere zum Einschieben von Kuvertiergut (28) in Umschlaghüllen mittels Einschubarmen (24), deren Finger in einem Arbeitshub etwa in Richtung einer Kuvertiergutauflagefläche (12) in deren Ebene von einer Ausgangsstellung auf die Öffnung einer Umschlaghülle hin vorzugsweise in Nuten (32) der Kuvertiergutauflagefläche bewegbar und in einem Rückhub oberhalb der Kuvertiergutauflagefläche in die Ausgangsstellung rückbewegbar sind, dadurch gekennzeichnet, daß die Einschubarme (24) mit parallel zur Einschubrichtung orientierten Traversenelementen (29) fest verbunden sind, welche an einer oberhalb der Kuvertiergutauflagefläche (12) parallel zu dieser in größerem Vertikalabstand verlaufenden Arbeitshubführung, einer ebenfalls oberhalb der Kuvertiergutauflagefläche (12) parallel zu dieser in geringerem Vertikalabstand verlaufenden Rückhubführung und an die Arbeitshubführung und die Rückhubführung an ihren jeweiligen Enden verbindenden Bogenführungen (13, 14, 15, 16) bewegbar sind, wobei die Einschubarme (24) an den Traversenelementen (29) derart befestigt sind, daß sie während des Arbeitshubes von der Arbeitshubführung aus an der Rückhubführung vorbei zu der Kuvertiergutauflagefläche reichen und während des Rückhubes von der Rückhubführung aus an der Arbeitshubführung vorbei nach aufwärts stehen.

2. Vorrichtung nach Anspruch 1, dadurch gekennzeichnet, daß die Arbeitshubführung, die Rückhubführung und die Bogenführungen vom Obertrum bzw. Untertrum bzw. den über an einem Gestell (17) gelagerten Räder (13, 14, 15, 16) oder Rollen gelegten Abschnitten zumindest eines endlosen, schleifenförmigen Antriebsstranges (10, 11) gebildet sind.

3. Vorrichtung nach Anspruch 2, dadurch gekennzeichnet, daß der bzw. jeder Antriebsstrang die Gestalt einer über im Bereich der Bogenführungen angeordnete Kettenräder (13, 14, 15, 16) gelegten Antriebskette (10, 11) hat.

4. Vorrichtung nach Anspruch 2, dadurch gekennzeichnet, daß der bzw. jeder Antriebsstrang die Gestalt eines über im Bereich der Bogenführungen angeordnete Rollen gelegten Riemens, insbesondere Zahnriemens, oder Drahtseiles hat.

5. Vorrichtung nach einem der Ansprüche 1 bis 4, dadurch gekennzeichnet, daß nahe der Enden der Traversenelemente (29) Rollen (35, 36) gelagert sind, welche zwischen mindestens längs der Arbeitshubführung verlaufenden Zusatz-Führungsschienen (34) geführt sind.

6. Vorrichtung nach einem der Ansprüche 2 bis 5, dadurch gekennzeichnet, daß die dem Ende des Arbeitshubes naheliegenden Räder (13, 14, 15, 16) oder Rollen zur Anspannung des jeweiligen Antriebsstranges (10, 11) an einem gegenüber dem Gestell (17) federnd vorgespannten Lagerbock (22) gelagert sind.

7. Vorrichtung nach einem der Ansprüche 2 bis 6, dadurch gekennzeichnet, daß das Gestell (17) an einer Schwenklagerung (18, 27) befestigt ist, derart, daß die Räder (13, 14, 15, 16) oder Rollen zusammen mit dem jeweiligen Antriebsstrang (10, 11) und gegebenenfalls die Zusatz-Führungsschienen (34) aus der zur Kuvertiergutauflagefläche (12) parallelen Arbeitslage hochklappbar sind.

8. Vorrichtung nach einem der Ansprüche 2 bis 7, dadurch gekennzeichnet, daß das Gestell (17) parallel zur Ebene der Kuvertiergutauflagefläche (12) senkrecht zur Richtung des Arbeitshubes der Einschubarme (25) verstellbar ist.

# FIG.1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 008 058 (MOLINS LTD)<br>* Seite 1, Zeilen 5-18,64,65; Seite 1, Zeile 93 - Seite 2, Zeile 14; Ansprüche 1,2 * | 1-4 | B 43 M 3/04<br>B 65 H 5/16<br>B 65 G 19/02 |
| Y | --- | 5-7 | |
| Y | GB-A-1 374 092 (MASSON SCOTT THRISSELL ENGINEERING LTD)<br>* Seite 2, Zeilen 69-84; Seite 3, Zeilen 19-64 * | 6 | |
| A | --- | 1,4 | |
| Y | US-A-4 318 660 (CHECKLEY et al.)<br>* Spalte 2, Zeilen 42-51; Spalte 3, Zeilen 1-16 * | 5 | |
| Y | --- <br>US-A-4 160 547 (BARTON et al.)<br>* Spalte 3, Zeile 51 - Spalte 4, Zeile 28 * | 7 | |
| A | --- <br>DE-A-1 511 418 (SUTER)<br>----- | | |

**RECHERCHIERTE SACHGEBIETE (Int. Cl.4)**

B 43 M
B 65 H
B 65 G

Der vorliegende Recherchenbericht wurde für alle Patentansprüche erstellt

| Recherchenort | Abschlußdatum der Recherche | Prüfer |
|---|---|---|
| DEN HAAG | 29-04-1988 | VAN OORSCHOT J.W.M. |